# EUROPÄISCHE PATENTANMELDUNG

(11) **EP 3 035 486 A1**
(43) Veröffentlichungstag der Anmeldung: **22.06.2016**
(21) Anmeldenummer: 14199364.2
(22) Anmeldetag: 19.12.2014
(51) Int. Cl.: H02J 7/00

(54) **Verfahren und Vorrichtung zum Laden, insbesondere zum sequentiellen Laden, von wiederaufladbaren Batterien und zum Laden von tiefentladenden Batterien**

(71) Anmelder: Fritec Friedrich & Hitschfel GmbH, 91338 Igensdorf (DE)
(72) Erfinder: Friedrich, Uwe, 91338 Igensdorf (DE)
(74) Vertreter: Schröer, Gernot H.

(57) **Zusammenfassung**

Verfahren zum Laden, insbesondere zum sequentiellen Laden, von wiederaufladbaren Batterien (18,18a...18f), bei dem ein Ladeverteiler (1) mit einem Ladegerät (6) mittels einer elektrischen Verbindung (4) zusammenwirkt, wobei der Ladeverteiler mindestens zwei Anschlüsse (10,10a...10f) zum Verbinden von wiederaufladbaren Batterien (18,18a...18f) mit dem Ladeverteiler (1) aufweist und ferner eine Kontrolleinheit (12,24) und mindestens eine Schaltvorrichtung (16,17) umfasst, wobei die Schaltvorrichtung (16,17) in Verbindung mit der Kontrolleinheit (12,24) steht, wobei die mindestens eine Schaltvorrichtung (16,17) mindestens einen Ladeschalter (30) umfasst, der den Ladestrom an die an den Anschlüssen (10,10a...10f) angeschlossene und zu ladende Batterie (18,18a...18f) schaltet und/oder schalten kann, mit den folgenden Schritten:
a) in einer Startsequenz Überprüfen von jedem Anschluss (10,10a...10f) des Ladeverteilers (1), ob mit diesem Anschluss (10,10a...10f) eine Batterie (18,18a...18f) verbunden ist, wobei während der Überprüfung die Spannung an den Anschlüssen (10,10a...10f) gemessen wird,
b) Zuschalten des Ladestroms durch den Ladeverteiler (1) über einen Ladeschalter (30) an eine mit einem Anschluss (10,10a...10f) verbundene Batterie (18,18a...18f),
c) Weiterschalten des Ladestroms durch den Ladeverteiler (1) über einen weiteren Ladeschalter (30) an eine weitere mit einem Anschluss (10,10a...10f) verbundene Batterie (18,18a...18f),
d) Überprüfen der Spannung an den Anschlüssen (10,10a...10f) und Detektion des Zustands bei einer oder mehrerer Batterien (18,18a...18f) hinsichtlich der Entladung,
wobei im Falle während dieser oder während einer weiteren Spannungs-überprüfung der Anschlüsse (10,10a...10f) ermittelten Tiefentladung einer Batterie (18,18a...18f) diese durch zugeschalteten Impulsladestrom vom Ladegerät (6) durch den Ladeverteiler (1) auf den Anschluss (10,10a...10f) die tiefentladene Batterie (18,18a...18f) geladen wird und/oder in einen ladefähigen Zustand gebracht wird.

## Beschreibung

Die Erfindung betrifft ein Verfahren und eine Vorrichtung zum Laden, insbesondere zum sequentiellen Laden von wiederaufladbaren, Batterien und zum Laden von tiefentladenden Batterien.

Unter dem Begriff einer wiederaufladbaren Batterie sind alle Arten von wiederaufladbaren Speichern für elektrische Energie zu verstehen, wie beispielsweise 12-V-Starterbatterien, die insbesondere im KFZ-Bereich zum Einsatz kommen. Nach einer gewissen, von der Kapazität der Batterie abhängigen Nutzungszeit, kann eine Batterie nicht mehr die notwendige Energie für den gedachten Einsatzzweck zur Verfügung stellen. Folglich muss diese mittels eines geeigneten Ladegerätes geladen werden. Ein derartiger Ladevorgang kann bis zur vollständigen Ladung der Batterie ein gewisses Maß an Zeit erfordern und beim Ladevorgang die Berücksichtigung einiger Kriterien nach sich ziehen, um Lebensdauer sowie Kapazität der Batterie nicht negativ zu beeinflussen. Im Extremfall kann eine unsachgemäße Ladung eine Zerstörung der Batterie zur Folge haben.

Es kann für den Nutzer weiterhin erforderlich sein, dass zeitnah mehrere Batterien für einen Einsatzzweck zur Verfügung stehen müssen, um beispielsweise einen schnellen Austausch einer leeren Batterie mit einer vollgeladenen möglich zu machen. Der Nutzer hat im Vorfeld die Möglichkeit, eine Batterie zu laden und bei vollständiger Ladung das Ladegerät an die nächste aufzuladende Batterie anzuschließen. Jedoch ist der Nutzer hierbei gefordert, den Ladevorgang laufend zu überwachen und dabei sicherstellen, dass das Ladeniveau bereits früher geladener und gelagerter Batterien nicht unter ein für die Batterien nachteiliges Niveau fällt. Daher ist es wünschenswert, dass mehrere Batterien vorzugsweise sequentiell, das heißt nacheinander, geladen, bzw. entsprechend überwacht werden, ohne dass der Nutzer in höheren Maße tätig werden muss.

Zwar sind Ladegeräte mit mehreren Ausgängen zum gleichzeitigen Anschluss von einer Vielzahl an Batterien bekannt. Jedoch sind diese vergleichsweise teuer und benötigen verhältnismäßig viel Energie. Insbesondere für nicht gewerbliche Nutzer ist eine Anschaffung eines derartigen Ladegeräts daher nachteilig. Auch die Anschaffung mehrerer herkömmlicher Ladegeräte mit je einem Ausgang stellt keine gute Alternative dar, da sich auch dies in hohen Anschaffungskosten und ineffizientem Energieverbrauch niederschlägt.

Es ist daher Aufgabe der Erfindung, ein verbessertes Laden von wiederaufladbaren Batterien vorzuschlagen, insbesondere ein sequentielles Laden mehrerer Batterien.

Diese Aufgabe wird hinsichtlich des Verfahrens gelöst durch die Merkmale des Anspruchs 1 und hinsichtlich der Vorrichtung durch die Merkmale des Anspruchs 6.

Vorteilhafte Ausgestaltungen und Weiterbildungen sind in den jeweils abhängigen Ansprüchen angegeben.

Bei dem Verfahren zum Laden, insbesondere zum sequentiellen Laden von wiederaufladbaren Batterien (oder: Zellen, Akkumulatoren) gemäß Anspruch 1 wirkt ein Ladeverteiler mit einem Ladegerät mittels einer elektrischen Verbindung zusammen, wobei der Ladeverteiler mindestens zwei Anschlüsse zum Verbinden von wiederaufladbaren Batterien mit dem Ladeverteiler aufweist und ferner eine Kontrolleinheit (oder: Steuerungs- und Regelungseinheit) und mindestens eine Schaltvorrichtung umfasst, wobei die Schaltvorrichtung in Verbindung mit der Kontrolleinheit steht, wobei die mindestens eine Schaltvorrichtung mindestens einen Ladeschalter umfasst, der den Ladestrom an die an den Anschlüssen angeschlossene und zu ladende Batterie schaltet und/oder schalten kann. Das Verfahren umfasst folgende Schritte:
a) in einer Startsequenz Überprüfen von jedem Anschluss des Ladeverteilers, ob mit diesem Anschluss eine Batterie verbunden ist, wobei während der Überprüfung die Spannung an den Anschlüssen gemessen wird,
b) Zuschalten des Ladestroms durch den Ladeverteiler über einen Ladeschalter an eine mit einem Anschluss verbundene Batterie,
c) Weiterschalten des Ladestroms durch den Ladeverteiler über einen weiteren Ladeschalter an eine weitere mit einem Anschluss verbundene Batterie,
d) Überprüfen der Spannung an den Anschlüssen und Detektion des Zustands bei einer oder mehrerer Batterien hinsichtlich der Entladung, wobei im Falle während dieser oder während einer weiteren Spannungsüberprüfung der Anschlüsse ermittelten Tiefentladung einer Batterie diese durch zugeschalteten Impulsladestrom vom Ladegerät durch den Ladeverteiler auf den Anschluss die tiefentladene Batterie geladen wird und/oder in einen ladefähigen Zustand gebracht wird.

Mit dem erfindungsgemäßen Verfahren ist es möglich, sequentiell mehrere Batterien zu laden, ohne dass der Nutzer selbst in den Ladevorgang eingreifen muss. Das heißt, der Nutzer kann eine Mehrzahl an Batterien an das Ladegerät anschließen und der Ladeverteiler schaltet autonom den vom Ladegerät kommenden Ladestrom an die zu ladende Batterie. Weiterhin ist der Ladeverteiler in der Lage, insbesondere nach Beendigung des Ladevorgangs an einer Batterie den Ladestrom an eine weitere Batterie zu schalten, um diese zu laden. Somit bietet das erfindungsgemäße Verfahren eine energie- und zeiteffiziente Lösung bei gleichzeitiger Wirtschaftlichkeit im Vergleich zu beispielsweise Ladegeräten mit mehreren Ausgängen.

Der erfindungsgemäße Ladeverteiler ist dazu ausgelegt, dass er an alle Typen von herkömmlichen Ladegeräten angeschlossen werden kann. Der Ladeverteiler kann für das Laden von einer Vielzahl von Batterietypen ausgelegt sein, wie beispielsweise 6V oder 12V Batterien bzw. Akkumulatoren. Es ist möglich eine Mehrzahl an Batterien durch eine Hochskalierung an Ausgängen am Ladeverteiler anzuschließen. Der Ladeverteiler beeinflusst ferner nicht die vorgesehenen Funktionalitäten des Ladegeräts, eine vorhandene Entsulfatierungsfunktion beispielsweise ist also weiterhin möglich.

Durch die Überprüfung der Spannung an den Anschlüssen kann vorteilhaft erkannt werden, ob überhaupt eine Batterie an einem Anschluss anliegt. Ein nicht genutzter Anschluss kann beim Ladevorgang ignoriert werden.

Durch die Spannungsüberprüfung kann weiterhin der Zustand der Batterie erkannt werden. Es wird dabei detektiert, ob eine Batterie geladen werden muss und der Ladestrom wird dieser entsprechend zugeschalten, bis diese aufgeladen ist. Auch eine Tiefentladung einer Batterie kann erkannt werden. Unter "Tiefentladung" ist zu verstehen, dass sich die Batterie in einem niedrigen Spannungsniveau befindet, beispielsweise verursacht durch eine Selbstentladung. Es soll verhindert werden, dass sich die Batterie noch tiefer entlädt bis zur Tiefst-entladung, also ein Absinken unter eine vorgegebene Entladeschlussspannung, was Schädigungen an der Batterie und eine Abnahme der Kapazität oder Lebensdauer verursachen kann. Um die tiefentladende Batterie auf eine Mindestspannung zu bringen, wird diese mittels kurzer Impulsladeströme durch Zuschalten des Ladegeräts an die Batterie geladen. Nach Abschluss dieser Impulsstromladung kann die Batterie beispielsweise in der sequentiellen Aufladung normal geladen werden.

Gemäß einer Weiterbildung der Erfindung wird die Batterie, welche den niedrigsten Ladezustand aufweist, bevorzugt aufgeladen und/oder erfolgt das Weiterschalten des Ladestroms durch den Ladeverteiler nach Abschluss einer vorgegebenen Zykluszeit erfolgt.

Durch das bevorzugte Laden von Batterien mit dem niedrigsten Ladezustand, wird verhindert, dass diese in einen ungünstigen Spannungsbereich fallen. Auch kann bei einer detektierten Tief- oder Tiefst-endladung eine zeitnahe Notladung nötig sein. Sind alle Batterien in einem für den Ladevorgang optimalen Spannungsbereich, kann der Ladeverteiler den Ladestrom zyklisch weiterschalten. Dieser Zyklus kann insbesondere eine vorgegebene Zeit sein, beispielsweise 12 Stunden. Es ist aber auch möglich, bei einer vollständigen Ladung der Batterie, den Ladestrom vorzeitig an die nächste Batterie zu schalten.

Gemäß einer Ausführungsvariante prüft der Ladeverteiler die Anschlüsse kontinuierlich.

Die kontinuierliche Überprüfung der Anschlüsse kann beispielsweise nach bestimmten Zeiten, beispielsweise einmal am Tag, erfolgen. Folglich ist es möglich, bereits geladene Batterien sachgerecht zu lagern, da eine Spannungsüberprüfung gewährleistet, dass die Batterien sich stets auf einem für sie günstigen Energieniveau befinden. Weiterhin kann erkannt werden, ob eine Batterie entnommen wurde.

Vorzugsweise schließt der Ladeverteiler Anschlüsse, die nicht mit einer Batterie verbunden und/oder nicht ladebar sind, vom weiteren Ladevorgang aus.

In der Folge wird der entsprechende Ausgang für den Ladevorgang ignoriert. Das Gerät kann somit den sequentiellen Ladevorgang der Batterien effizient und ohne Eingriffe des Nutzers steuern, ohne dass ein Ladegerät extra auf eine zu ladende Batterie manuell geschaltet werden muss. Weiterhin kann vorgesehen sein, dass der aktuelle Status und/oder der aktuelle Zustand der Batterie auf einer Anzeige ausgegeben wird.

Damit kann dem Nutzer beispielsweise angezeigt werden, dass eine Batterie aktuell geladen wird oder beispielsweise, dass an dem Ausgang keine Batterie angeschlossen ist. Auch ist es denkbar, dass eine defekte Batterie angezeigt wird oder dass eine Notladung der Batterie gerade stattfindet. Auch kann angezeigt werden, dass ein Ladegerät angeschlossen ist.

Die Vorrichtung zum Laden, insbesondere zum sequentiellen Laden von wiederaufladbaren Batterien gemäß Anspruch 6 umfasst ein Ladegerät und einen Ladeverteiler, die mittels einer elektrischen Verbindung zusammenwirken, wobei der Ladeverteiler folgendes aufweist:
a) mindestens zwei Anschlüsse zum Verbinden von wiederaufladbaren Batterien mit dem Ladeverteiler,
b) eine Kontrolleinheit, wobei die Kontrolleinheit die Anschlüsse überwacht und mindestens eine Spannung detektiert,
c) einen Ladestrompfad, über den der von dem Ladegerät zur Verfügung gestellte Ladestrom an eine an einem Anschluss angeschlossene und zu ladende Batterie verteilt wird und/oder verteilt werden kann,
d) mindestens eine Schaltvorrichtung, die in Verbindung mit der Kontrolleinheit steht, wobei die mindestens eine Schaltvorrichtung mindestens einen Ladeschalter umfasst, der den Ladestrom an die an den Anschlüssen angeschlossene und zu ladende Batterie schaltet und/oder schalten kann, wobei das Ladegerät durch den Ladeverteiler über die Schaltvorrichtung mit einer zu ladenden Batterie, insbesondere mit einer tiefentladenen Batterie zumindest zeitweise in elektrischer Verbindung steht und/oder stehen kann und wobei der Ladestrom dieser Batterie zum Laden als Impulsstrom zugeschaltet wird und/oder zugeschaltet werden kann.

Mit der erfindungsgemäßen Vorrichtung ist es möglich, sequentiell mehrere Batterien zu laden, ohne dass der Nutzer selbst in den Ladevorgang eingreifen muss.

Wie bereits erläutert, ist der erfindungsgemäße Ladeverteiler dazu ausgelegt, dass er an alle Typen von herkömmlichen Ladegeräten angeschlossen werden kann. Der Ladeverteiler kann für das Laden von einer Vielzahl von Batterietypen ausgelegt sein, wie beispielsweise 6V oder 12V Batterien bzw. Akkumulatoren. Es ist möglich eine Mehrzahl an Batterien durch eine Hochskalierung an Ausgängen am Ladeverteiler anzuschließen. Der Ladeverteiler beeinflusst ferner nicht die vorgesehenen Funktionalitäten des Ladegeräts, eine vorhandene Entsulfatierungsfunktion beispielsweise ist also weiterhin möglich.

Durch die Überprüfung der Spannung an den Anschlüssen kann vorteilhaft erkannt werden, ob überhaupt eine Batterie an einem Anschluss anliegt. Ein nicht genutzter Anschluss kann beim Ladevorgang ignoriert werden.

Durch die Spannungsüberprüfung kann weiterhin der Zustand der Batterie erkannt werden. Mittels der bereits beschriebenen Zuschaltung eines Impulsladestroms vom Ladegerät an eine tiefentladene Batterie ist es möglich, bevorzugt diese zu laden, bis diese ein günstiges Spannungsniveau erreicht. Nach Abschluss kann die Batterie normal geladen werden.

Vorteilhafterweise umfasst die Kontrolleinheit einen Multiplexer.

Dies kommt der Regelung oder Steuerung der Schaltvorrichtung und/oder der Ladeschalter vorteilhaft zu Gute.

Gemäß einer Weiterbildung ist die elektrische Verbindung über einen Steckverbinder realisiert.

Durch einen Steckverbinder lässt sich eine schnelle und unkomplizierte Verbindung zwischen Ladegerät und Ladeverteiler realisieren. Der Steckverbinder kann ein üblicherweise erhältlicher Stecker sein, damit alle Arten von Ladegeräten an den Ladeverteiler angeschlossen werden können. Auch ist der Einsatz eines Ladegeräts mit einem handelsüblichen USB-(Universal Serial Bus) Anschluss denkbar. Über einen entsprechend ausgestalteten USB-Stecker kann ein derartiges Ladegerät an den Ladeverteiler angeschlossen werden. Es ist auch möglich, den Steckverbinder mit einer Sicherung auszustatten, um mögliche Schäden durch Begrenzung des Ladestroms und die Gefahr eines Kurzschlusses zu vermeiden.

Gemäß einer Variante entnimmt die Kontrolleinheit Strom aus den angeschlossenen Batterien.

Dies ist besonders vorteilhaft, da hierdurch der Ladeverteiler, bzw. die Kontrolleinheit des Ladeverteilers keine eigene Stromversorgung aufweisen muss. Die Kontrolleinheit kann beispielsweise mit einem Kondensator in Verbindung stehen, der über die Batterien aufgeladen wird und dem Ladeverteiler Strom zur Verfügung stellt.

Bevorzugt steht die Kontrolleinheit mit den Anschlüssen in elektrischer Verbindung.

Durch diese Verbindung ist es der Kontrolleinheit möglich, zum einen die Spannungsüberprüfung der Anschlüsse vorzunehmen. Zum anderen kann hierdurch den Batterien Strom zur Energieversorgung des Ladeverteilers entnommen werden.

Weiterhin kann vorgesehen sein, dass der Ladeverteiler eine Ladestatusanzeige und eine Anschlussanzeige umfasst, die innerhalb eines Anzeigebereichs angeordnet sind.

Damit kann dem Nutzer beispielsweise angezeigt werden, dass eine Batterie aktuell geladen wird oder beispielsweise, dass an dem Ausgang keine Batterie angeschlossen ist. Auch ist es denkbar, dass eine defekte Batterie angezeigt wird oder dass eine Notladung der Batterie gerade stattfindet. Auch kann angezeigt werden, dass ein Ladegerät angeschlossen ist. Der Anzeigebereich kann an einer Stelle des Gehäuses vorgesehen sein, die dem Nutzer eine optimale Sicht und damit eine schnelle Information beispielsweise über aktuell angeschlossene Batterien gibt.

Gemäß einer weiteren Ausführungsvariante ist der Anzeigebereich ein Display und/oder umfasst die Ladestatusanzeige und/oder die Anschlussanzeige LED, vorzugsweise mehrfarbige LED.

Durch ein Display können vielfältige Informationen über Ladezustand, aber auch über die aktuelle Ladung angezeigt werden. Durch die Verwendung von LED kann eine simple und gut zu realisierende Konfiguration der Anzeigen erreicht werden. Durch den Einsatz mehrfarbiger LED kann beispielsweise zusätzlich Platz gespart auf dem Gehäuse gespart werden und verschieden Informationen dem Nutzer übersichtlich präsentiert werden.

Eine weitere vorteilhafte Ausführungsvariante sieht vor, dass die Schaltvorrichtung und/oder die Ladeschalter zumindest einen Transistor umfassen.

Für den Einsatz von Transistoren für derartige Schaltungen kommen insbesondere N-Kanal- Feldeffekt Transistoren in Betracht. Diese bieten reduzierte Verlustleistung bei gleichzeitig günstigem Preis. Auch schalten derartige Transistoren beim Vorliegen eines Kurzschlusses am Ausgang vollständig ab.

Weiterhin kann eine Hilfsspannungsquelle vorgesehen sein.

Durch diese ist das Schalten von N-Kanal-FET vorteilhafterweise ermöglicht, um eine gegenüber der zu schaltenden Spannung erhöhte Gatespannung zu ermöglichen

Besonders vorteilhaft ist ein Kondensator, vorzugsweise ein Elektrolytkondensator, zur Entkopplung der Ladeströme von der Messung des Ladeverteilers vorgesehen.

Durch eine derartige Entkoppelung wird verhindert, dass insbesondere bei einer Impulsladung der Ladeverteiler beschädigt wird, da dieser mit den Ausgängen in elektrischer Verbindung steht.

Die Erfindung wird im Folgenden anhand von Ausführungsbeispielen näher erläutert. Dabei wird auch auf die folgenden Zeichnungen Bezug genommen, in denen jeweils schematisch dargestellt ist:
- FIG 1: ein Ladeverteiler gemäß einem Ausführungsbeispiel;
- FIG 2: eine Strukturdarstellung des Ladeverteilers gemäß einem Ausführungsbeispiel;
- FIG 3: eine weitere Strukturdarstellung des Ladeverteilers gemäß einem Ausführungsbeispiel;
- FIG 4: eine weitere Strukturdarstellung des Ladeverteilers gemäß einem Ausführungsbeispiel;

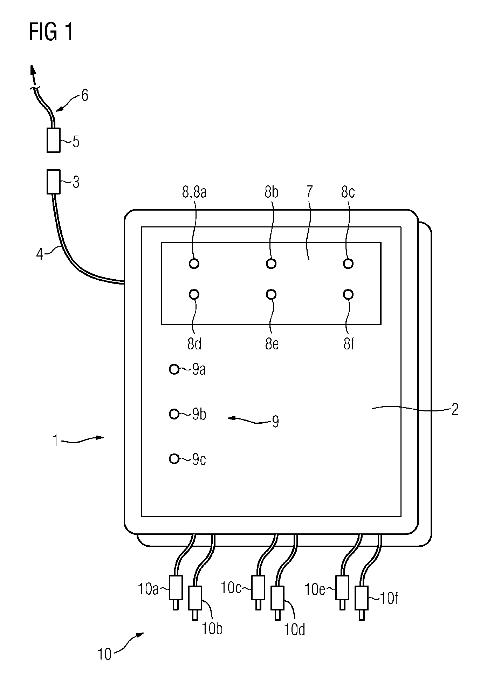

Einander entsprechende Teile und Größen sind in den FIG 1 bis 4 mit denselben Bezugszeichen versehen.

FIG 1 zeigt einen Ladeverteiler 1 gemäß einem Ausführungsbeispiel. Der Ladeverteiler 1 umfasst ein Gehäuse 2, innerhalb dessen die Elektronik des Ladeverteilers 1 untergebracht ist. Über ein Verbindungskabel 4 lässt sich mit dem Ladeverteiler 1 eine Verbindung 6 zum einem nicht dargestellten Ladegerät herstellen. In der weiteren Beschreibung wird diese Verbindung als Ladegerät 6 bezeichnet. Die Verbindung lässt sich mittels Steckverbindern 3 und 5 erreichen. Es sind selbstverständlich auch weitere Verbindungsformen möglich, wie beispielsweise eine nichtlösbare Verbindung der Kabel durch Zusammenlöten oder -schrauben. Auch ist der Einsatz eines Ladegeräts 6 mit einem handelsüblichen USB- (Universal Serial Bus) Anschluss denkbar. Über einen entsprechend ausgestalteten USB-Stecker kann ein derartiges Ladegerät 6 an den Ladeverteiler 1 angeschlossen werden.

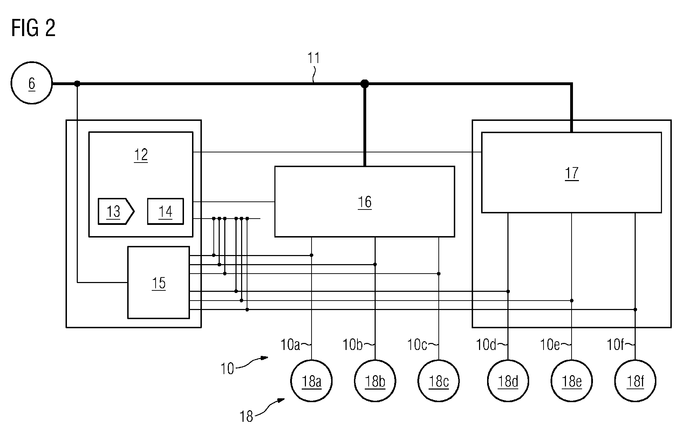

Ein von dem Ladegerät 6 zur Verfügung gestellter Ladestrom kann über den Ladeverteiler 1 einer, beispielsweise in FIG 2 dargestellten, angeschlossenen Batterie 18 zugeschalten werden um diese aufzuladen. Nach einem vorbestimmten Ladezyklus kann der Ladeverteiler 1 den Ladestrom des Ladegeräts 6 einer weiteren angeschlossenen Batterie 18 zuschalten. Beispielsweise kann so ein Ladezyklus eine Stunde, aber auch ein oder mehrere Tage dauern. Nach Abschluss des Ladevorgangs kann der Ladeverteiler 1 ein vorzugsweise optisches Signal ausgeben, dass der Ladevorgang beendet ist.

Ein in oder am Ladeverteiler 1 angeordneter Anzeigebereich 7 umfasst in diesem Beispiel eine Ladestatusanzeige 8, wohingegen eine Anschlussanzeige 9 außerhalb des Anzeigebereichs 7 angeordnet ist. Es ist jedoch auch möglich, die Anschlussanzeige 9 zusätzlich innerhalb des Anzeigebereichs 7 anzuordnen. Die Ladestatusanzeige 8 und die Anschlussanzeige 9 können weiterhin beispielsweise auch über ein (LCD-)Display realisiert werden. Eine andere und einfache Lösung ist die Verwendung von lichtemittierenden Dioden (LED) innerhalb der Ladestatusanzeige 8 und Anschlussanzeige 9. Für die Ladestatusanzeige 8 ist es weiterhin sinnvoll, dass deren Darstellung mehrfarbig realisiert ist, beispielsweise sind dafür Rot-Grün-Duo-LED denkbar, die zusätzlich orange als Mischfarbe darstellen können.

Die Ladestatusanzeige 8 zeigt eine Anzahl von Batterien 18 und deren aktuellen Status an, die an den Ladeverteiler 1 über Anschlüsse 10 angeschlossen sind. Die Anschlussanzeige 9 hingegen gibt dem Benutzer somit Informationen über den Status des Laderverteilers 1 und des Ladevorgangs.

FIG 2 zeigt eine Strukturdarstellung des Ladeverteilers gemäß einem Ausführungsbeispiel. Vom Ladegerät 6 kommend ist ein Ladestrompfad 11 ersichtlich, der zumindest teilweise dem Verbindungskabel 4 in FIG 1 entspricht und den Ladestrom in den Ladeverteiler 1 leitet. Dieser vom Ladegerät 6 zur Verfügung gestellte Ladestrom wird über Schaltvorrichtungen 16, 17 auf einen entsprechenden Anschluss 10 geschaltet, um eine angeschlossene Batterien mit Ladestrom zu versorgen. Im Ausführungsbeispiel sind zwei Schaltvorrichtungen 16, 17 aufgeführt mit je drei Anschlüssen 10 für anschließbare Batterien 18. Eine Variation der Anzahl dieser Schaltvorrichtungen 16, 17 in verschiedenen Ausführungen des Ladeverteilers 1 ist möglich, um beispielsweise eine höhere oder geringere Zahl an Batterien laden zu können. Vorzugsweise sind die Schaltvorrichtungen 16,17 als Feldeffekttransistoren (FET), insbesondere als n-Kanal-MOSFET (MetallOxid-Halbleiter-Feldeffekttransistor) ausgestaltet. Diese bieten reduzierte Verlustleistung und schalten im Falle eines Kurzschlusses an einem Anschluss 10 vollständig ab.

Eine Kontrolleinheit 12, beispielsweise als PIC-Microcontroller ausgebildet, umfasst einen Analog-Digital-Converter 13 und einen Multiplexer 14 und steht in Verbindung mit den Schaltvorrichtungen 16,17. Ein Netzteil 15 ist weiterhin vorgesehen und kann beispielsweise dazu ausgebildet sein, Strom aus den Ausgängen 10, bzw. aus den Batterien 18, insbesondere aus einer geladenen Batterien 18 für die Stromversorgung des Ladeverteilers 1 zu beziehen. Jedoch ist es auch denkbar, die Stromversorgung über das Ladegerät 6 zu realisieren.

Insbesondere ist die Kontrolleinheit 12 dazu ausgebildet, die Spannung an den Anschlüssen 10 zu messen und damit den Status der einer angeschlossenen Batterie 18 zu bestimmen und steht zu diesem Zweck mit diesen in Verbindung.

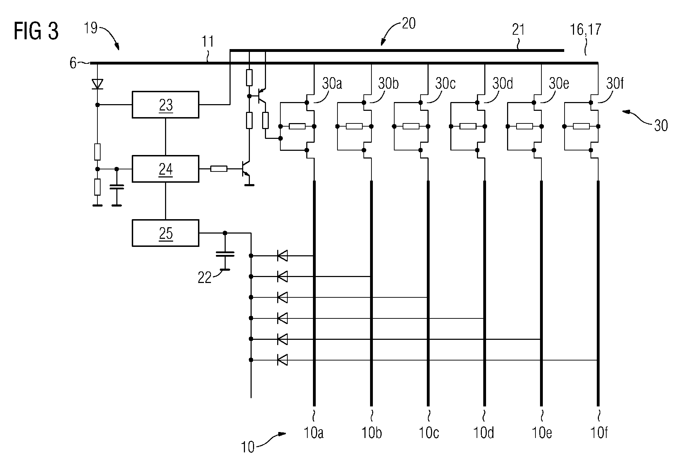

FIG 3 zeigt eine weitere Strukturdarstellung des Ladeverteilers gemäß einem Ausführungsbeispiel. Die im Wesentlichen der Kontrolleinheit 12 entsprechende Kontrolleinheit 24 ist in diesem Ausführungsbeispiel mit einem Schaltregler 25 zur Spannungskonvertierung auf eine niedrigere Spannung und ferner mit einer Hilfsspannungsquelle 23 verbunden. Sollen beispielsweise N-Kanal-MOSFET als Schaltvorrichtung 16, 17 in Betracht kommen, kann eine erhöhte Gatespannung 20 nötig sein, welche die zum Schalten benötigte Schaltspannung 19 übersteigt. Diese kann durch die Hilfsspannungsquelle 23 über einen Verstärkungspfad 21 bereitgestellt werden.

Die Schaltvorrichtung 16, 17 steht in Verbindung mit mindestens einem elektrischen Ladeschalter 30, um den Ladestrom vom Ladegerät 6 auf die Anschlüsse 10 zu schalten und damit eine Batterie 18 mit Ladestrom zu versorgen. Umgekehrt kann der Ladeverteiler 1 verhindern, dass ein oder mehrere Ladeschalter 30 Ladestrom an eine Batterie 18 durchschalten. Somit ist es möglich, eine Batterie 18 einzeln zu laden und bedarfsweise den Ladestrom an eine andere Batterie 18 weiterzuschalten, während die weiteren zu ladenden Batterien 18 erst später geladen werden. Dies macht ein sequentielles Aufladen der Batterien 18 möglich.

Wie der FIG 3 zu entnehmen ist, steht die Kontrolleinheit 24 in Verbindung mit den Anschlüssen 10, um die Spannung an diesen zu messen. Eine derartige Spannungsmessung wird als Grundlage dafür herangezogen, wie der Ladevorgang konkret realisiert wird und wie der Status der einer Batterie zu bewerten ist.

Das folgende Ausführungsbeispiel geht vom Einsatz für 12 V Batterien aus. Der Ladeverteiler ist auch für andere Batterietypen einsetzbar, beispielsweise für 24 V Starterbatterien, die unter anderem bei LKW zum Einsatz kommen. Die entsprechend unterschiedlichen Spannungsbereiche würden jedoch von der Vorrichtung erkannt und richtig umgesetzt werden.

Zur Veranschaulichung der Funktionsweise des Ladeverteilers 1 seien nun, wie in FIG 1 bis 4 zu sehen, beispielhaft sechs Batterien 18a bis 18f an den Ladeverteiler 1 über die jeweils entsprechenden Anschlüsse 10a bis 10f angeschlossen, jeweils in Verbindung mit einem Ladeschalter 30a bis 30f. Wird nun beispielsweise an dem Anschluss 10a eine Spannung von über 12 V gemessen, so ist davon auszugehen, dass die Batterie 18a in Ordnung ist und der Ladestrom kann über den Ladeschalter 30a der Batterie 18a zugeschalten werden, beispielsweise für eine Ladezeit von einer Stunde. Während dieser Ladezykluszeit werden die anderen angeschlossenen Batterien nicht geladen. Nach Ablauf der Zykluszeit wird der Ladestrom zur nächsten Batterie 18b bis 18f weitergeschalten, vorzugsweise zur derjenigen Batterie, die den niedrigsten Ladestatus aufweist.

Wird hingegen beispielsweise am Anschluss 10f eine Spannung zwischen 10 V und 12 V ermittelt, gilt die Batterie, in diesem Fall die Batterie 18f, als tiefentladen. In diesem Fall wird ein Notstart versucht, um die Batterie 18f zunächst auf einen Spannungswert von über 12 V zu bringen, also in einen optimalen Spannungsbereich.

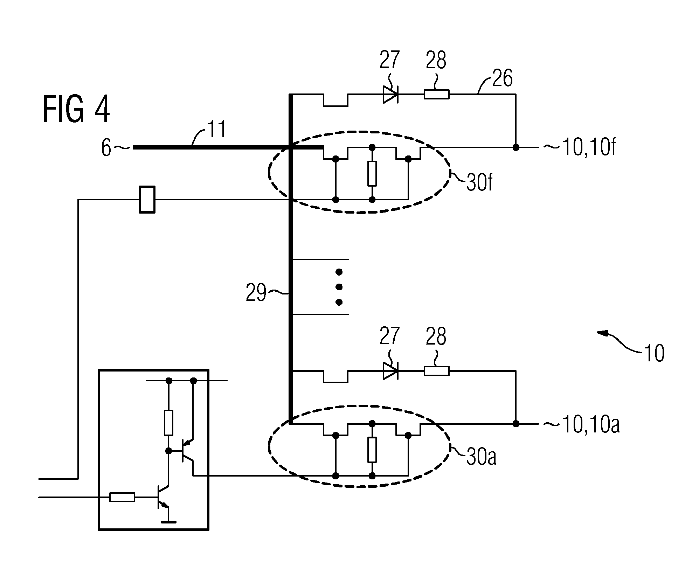

Ein solches Notstarten der Batterie 18f bei einer vorliegenden Tiefentladung ist in zweierlei Hinsicht möglich:
1. Das Laden mit Impulsen durch Schalten eines Impuls-Ladestroms durch das Ladegerät 6 auf die Batterie 18f, bis diese geladen ist oder einen Spannungswert von über 12 V aufweist und dann herkömmlich geladen werden kann. Dabei wird die Batterie 18f mit einem konstanten Strom geladen, der allerdings nach einer festgelegten Zeit unterbrochen wird. Mittels eines Kondensators 22 können Impulsströme von den Messvorrichtungen des Ladeverteilers 1 entkoppelt werden.
2. Das Laden mittels eines Notstartpfads 26, der in der FIG 4 dargestellt ist. In dieser Strukturzeichnung dieses Ausführungsbeispiels umfasst jeder Ladestrompfad 11 in Verbindung mit den Ladeschaltern 30a bis 30f (wobei der eingezeichnete Platzhalter 29 die weiteren Ladeschalter in der FIG 4 nur andeutet) jeweils einen Notstartpfad 26, der parallel zu diesen verläuft und in Verbindung mit den Anschlüssen 10a bis 10f und damit mit einer aufzuladenden Batterie 18a bis 18f steht. Der Ladestrom kann im Beispiel der tiefentladenen Batterie 18f somit parallel zum Ladeschalter 30f an diese Batterie 18f impulsartig zugeschalten werden, um den Ladeschalter 30f und die Schaltvorrichtung 26, 27 möglichst nicht durch Überlastung zu zerstören. Zur Vermeidung zu hoher Ströme ist im Notstartpfad 26 ein Vorwiderstand 28 vorgesehen. Ferner umfasst der Notstartpfad 26 eine Sperrdiode 27.

Die Spannungsmessung kann auch erkennen, ob eine Batterie 18a bis 18f tiefst-entladen ist. Dies liegt vor wenn Spannungswerte unterhalb von 10 V vorliegen. Für diesen Fall ist eine Notladung vorgesehen, wobei aus einer anderen, vollgeladenen Batterie 18a bis 18f ein Impulsstrom entnommen wird, um die tiefst-entladene Batterie 18a bis 18f auf Spannungswerte über 10 V zu bringen. Beispielsweise kann eine tiefst-entladene Batterie 18c für einen Zeitraum von 5 Minuten auf diese Weise notgeladen werden, indem die geladene Batterie 18a während deren Ladung für die Entnahme eines Impulsstroms herangezogen wird. Nach Ablauf dieses Zeitraums erfolgt eine weitere Spannungsmessung. Liegen normale Spannungswerte vor, kann diese Batterie 18c innerhalb eines normalen Ladevorgangs geladen werden. Ist dies nicht der Fall, kann die Notladung beispielsweise zwei Mal wiederholt werden. Ist die tiefst-entladene Batterie 18c weiterhin nicht in einem ladbaren Zustand, muss davon ausgegangen werden, dass die Batterie 18c defekt ist und der entsprechende Anschluss 10c von einem weiteren Ladevorgang ausgeschlossen werden muss. Wird diese Batterie jedoch abgeklemmt, ist dieser Fehlerzustand nicht mehr aktiv.

Die Spannung an den Anschlüssen 10 wird beispielsweise in einer Startsequenz ermittelt. Es ist jedoch auch möglich, die Spannung kontinuierlich zu messen, um beispielsweise zu erkennen, ob eine Batterie 18 entnommen wurde. Die oben erläuterten Spannungswerte können in der Praxis variieren und dienen nur zu Veranschaulichung einer Nutzungsmöglichkeit des Ladeverteilers 1 mit einer 12 V Batterie.

Die erläuterten Zustände, die der Ladeverteiler 1 detektieren kann, können vorzugsweise auch optisch ausgegeben werden. Im Anzeigebereich 7 (vgl. FIG 1) ist zu erkennen, dass die Ladestatusanzeige 8 bei einer Unterteilung in die Anzeigen 8a bis 8f jeweils die angeschlossenen Batterien 18a bis 18f anzeigt. Ist jedoch beispielsweise der Anschluss 10a nicht besetzt, erscheint die Ladestatusanzeige 8a nicht, bzw. gibt es keine optische Rückmeldung. Die Anschlussanzeige 9 kann weiterhin Rückmeldung über den Status des Ladegeräts geben. Im Ausführungsbeispiel ist die Anschlussanzeige 9 in drei Anschlussanzeigen 9a bis 9c unterteilt, wobei alle drei vorteilhafterweise jeweils in einer verschiedenen Farbe ausgeführt sind. Der Ladeverteiler 1 gibt bei der Spannungsmessung an den Batterien 18 also auch eine optische Rückmeldung über die Anzeige 7 am Ladeverteiler 1, genauer gesagt über die Ladestatusanzeige 8 und die Anschlussanzeige 9 aus. Das Ausführungsbeispiel ist zur Veranschaulichung die Ladestatusanzeige 8 und Anschlussanzeige 9 dabei folgendermaßen spezifiziert:

Für die Ladestatusanzeige 8, bzw. jede einzelne Ladestatusanzeige 8a bis 8f gilt:
- Dauergrün: Batterie ist in Ordnung und/oder vollständig geladen.
- Grün blinkend: Batterie wird gerade geladen.
- Orange: Batterie ist tiefentladen.
- Orange blinkend: tiefentladene Batterie wird geladen.
- Dauer-Rot: Batterie ist tiefst-entladen.
- Rot blinkend: eine tiefst-entladene Batterie wird geladen.
- Ohne Farbe: keine Batterie angeschlossen oder zu geringe Spannung.

Bei der Anschlussanzeige 9 gilt weiterhin:
a) Grüne Farbe: ein Ladegerät 6 ist angeschlossen.
b) Gelbe Farbe: die aktuell zugeschaltete Batterie wird notgeladen.
c) Rote Farbe: nicht angeschlossenes oder nicht erkanntes Ladegerät 6. Zusätzlich meldet ein rotes Blinken eine defekte und nicht ladbare Batterie 18.

Alternativ kann die Anschlussanzeige 9 auch derart ausgestaltet sein, dass die Zykluszeit bis zum Umschalten des Ladevorgangs auf eine Batterie angezeigt wird. Beispielsweise können gemäß Fig. 1 die Anschlussanzeigen 9a bis 9c gleichfarbige LED umfassen und folgendermaßen geschalten werden:
- Anschlussanzeige 9a leuchtet: Zykluszeit 48 Stunden
- Anschlussanzeige 9b leuchtet: Zykluszeit 24 Stunden
- Anschlussanzeige 9c leuchtet: Zykluszeit 1 Stunde

Selbstverständlich sind auch andere Konfigurationen der Ladestatusanzeige 8 und Anschlussanzeige 9 denkbar.

### Bezugszeichenliste

- 1: Ladeverteiler
- 2: Gehäuse
- 3: Steckverbinder Ladeverteiler
- 4: Verbindungskabel
- 5: Steckverbinder Ladegerät
- 6: Verbindung zum Ladegerät/Ladegerät
- 7: Anzeigebereich
- 8,8a...8f: Ladestatusanzeige
- 9,9a...9c: Anschlussanzeige
- 10,10a...10f: Anschluss
- 11: Ladestrompfad
- 12: Kontrolleinheit
- 13: Analog-Digital-Converter
- 14: Multiplexer
- 15: Netzteil
- 16,17: Schaltvorrichtung
- 18,18a...18f: Batterien
- 19: Schaltspannung
- 20: erhöhte Gatespannung
- 21: Verstärkungspfad
- 22: Kondensator
- 23: Hilfsspannungsquelle
- 24: Kontrolleinheit
- 25: Schaltregler
- 26: Notstartpfad
- 27: Sperrdiode
- 28: Vorwiderstand
- 29: Platzhalter
- 30: Ladeschalter

## Patentansprüche

1. Verfahren zum Laden, insbesondere zum sequentiellen Laden, von wiederaufladbaren Batterien (18,18a...18f), bei dem ein Ladeverteiler (1) mit einem Ladegerät (6) mittels einer elektrischen Verbindung (4) zusammenwirkt, wobei der Ladeverteiler mindestens zwei Anschlüsse (10,10a...10f) zum Verbinden von wiederaufladbaren Batterien (18,18a...18f) mit dem Ladeverteiler (1) aufweist und ferner eine Kontrolleinheit (12,24) und mindestens eine Schaltvorrichtung (16,17) umfasst, wobei die Schaltvorrichtung (16,17) in Verbindung mit der Kontrolleinheit (12,24) steht, wobei die mindestens eine Schaltvorrichtung (16,17) mindestens einen Ladeschalter (30) umfasst, der den Ladestrom an die an den Anschlüssen (10,10a...10f) angeschlossene und zu ladende Batterie (18,18a...18f) schaltet und/oder schalten kann, mit den folgenden Schritten:
a) in einer Startsequenz Überprüfen von jedem Anschluss (10,10a...10f) des Ladeverteilers (1), ob mit diesem Anschluss (10,10a...10f) eine Batterie (18,18a...18f) verbunden ist, wobei während der Überprüfung die Spannung an den Anschlüssen (10,10a...10f) gemessen wird,
b) Zuschalten des Ladestroms durch den Ladeverteiler (1) über einen Ladeschalter (30) an eine mit einem Anschluss (10,10a...10f) verbundene Batterie (18,18a...18f),
c) Weiterschalten des Ladestroms durch den Ladeverteiler (1) über einen weiteren Ladeschalter (30) an eine weitere mit einem Anschluss (10,10a...10f) verbundene Batterie (18,18a...18f),
d) Überprüfen der Spannung an den Anschlüssen (10,10a...10f) und Detektion des Zustands bei einer oder mehrerer Batterien (18,18a...18f) hinsichtlich der Entladung,
wobei im Falle während dieser oder während einer weiteren Spannungsüberprüfung der Anschlüsse (10,10a...10f) ermittelten Tiefentladung einer Batterie (18,18a...18f) diese durch zugeschalteten Impulsladestrom vom Ladegerät (6) durch den Ladeverteiler (1) auf den Anschluss (10,10a...10f) die tiefentladene Batterie (18,18a...18f) geladen wird und/oder in einen ladefähigen Zustand gebracht wird.

2. Verfahren nach Anspruch 1, bei dem die Batterie (18,18a...18f), welche den niedrigsten Ladezustand aufweist, bevorzugt aufgeladen wird und/oder bei dem das Weiterschalten des Ladestroms durch den Ladeverteiler (1) nach Abschluss einer vorgegebenen Zykluszeit erfolgt.

3. Verfahren nach Anspruch 1 oder 2, bei dem der Ladeverteiler (1) die Anschlüsse (10,10a...10f) kontinuierlich überprüft.

4. Verfahren nach einem der Ansprüche 1 bis 3, bei dem der Ladeverteiler (1) Anschlüsse (10,10a...10f), die nicht mit einer Batterie (18,18a...18f) verbunden und/oder nicht ladebar sind, vom weiteren Ladevorgang ausschließt.

5. Verfahren nach einem der Ansprüche 1 bis 4, bei dem der aktuelle Status und/oder der aktuelle Zustand der Batterie (18,18a...18f) auf einer Anzeige (7, 8,8a...8f, 9,9a...9c) ausgegeben wird.

6. Vorrichtung zum Laden, insbesondere zum sequentiellen Laden, von wiederaufladbaren Batterien (18,18a...18f), umfassend ein Ladegerät (6) und einen Ladeverteiler (1), die mittels einer elektrischen Verbindung (4) zusammenwirken, wobei der Ladeverteiler (1) folgendes aufweist:
a) mindestens zwei Anschlüsse (10,10a...10f) zum Verbinden von wiederaufladbaren Batterien (18,18a...18f) mit dem Ladeverteiler (1),
b) eine Kontrolleinheit (12,24), wobei die Kontrolleinheit (12,24) die Anschlüsse (10,10a...10f) überwacht und mindestens eine Spannung detektiert,
c) einen Ladestrompfad (11), über den der von dem Ladegerät (6) zur Verfügung gestellte Ladestrom an eine an einem Anschluss (10,10a...10f) angeschlossene und zu ladende Batterie (18,18a...18f) verteilt wird und/oder verteilt werden kann,
d) mindestens eine Schaltvorrichtung (16,17), die in Verbindung mit der Kontrolleinheit (12,24) steht, wobei die mindestens eine Schaltvorrichtung (16,17) mindestens einen Ladeschalter (30) umfasst, der den Ladestrom an die an den Anschlüssen (10,10a...10f) angeschlossene und zu ladende Batterie schaltet und/oder schalten kann,
wobei das Ladegerät (6) durch den Ladeverteiler (1) über die Schaltvorrichtung (16,17) mit einer zu ladenden Batterie (18,18a...18f), insbesondere mit einer tiefentladenen Batterie zumindest zeitweise in elektrischer Verbindung steht und/oder stehen kann und wobei der Ladestrom dieser Batterie (18,18a...18f) zum Laden als Impulsstrom zugeschaltet wird und/oder zugeschaltet werden kann.

7. Vorrichtung nach Anspruch 6, bei der die Kontrolleinheit (12,24) einen Multiplexer (14) umfasst.

8. Vorrichtung nach einem der Ansprüche 6 oder 7, bei der die elektrische Verbindung über einen Steckverbinder (3,5) realisiert wird.

9. Vorrichtung nach einem der Ansprüche 6 bis 8, bei der die Kontrolleinheit (12,24) Strom aus den angeschlossenen Batterien (18,18a...18f) entnimmt.

10. Vorrichtung nach einem der Ansprüche 6 bis 9, bei der die Kontrolleinheit (12,24) mit den Anschlüssen (10,10a...10f) in elektrischer Verbindung steht.

11. Vorrichtung nach einem der Ansprüche 6 bis 10, bei der der Ladeverteiler (1) eine Ladestatusanzeige (8,8a...8f) und eine Anschlussanzeige (9,9a...9c) umfasst, die innerhalb eines Anzeigebereichs (7) angeordnet sind.

12. Vorrichtung nach Anspruch 11, bei der der Anzeigebereich (7) ein Display ist und/oder bei der die Ladestatusanzeige (8,8a...8f) und/oder die Anschlussanzeige (9,9a...9c) LED, vorzugsweise mehrfarbige LED umfasst.

13. Vorrichtung nach einem der Ansprüche 6 bis 12, bei der die Schaltvorrichtung (16,17) und/oder die Ladeschalter (30) zumindest einen Transistor umfassen.

14. Vorrichtung nach einem der Ansprüche 6 bis 13, bei der eine Hilfs-spannungsquelle (23) vorgesehen ist.

15. Vorrichtung nach einem der Ansprüche 6 bis 14, bei der ein Kondensator (22), vorzugsweise ein Elektrolytkondensator, zur Entkopplung der Ladeströme von der Messung des Ladeverteilers (1) vorgesehen.

## Geänderte Patentansprüche

### Geänderte Patentansprüche gemäss Regel 137(2) EPÜ.

1. Verfahren zum sequentiellen Aufladen, von mehreren wiederaufladbaren Batterien (18,18a...18f), bei dem ein Ladeverteiler (1) mit einem Ladegerät (6) mittels einer elektrischen Verbindung (4) zusammenwirkt, wobei der Ladeverteiler mindestens zwei Anschlüsse (10,10a...10f) zum Verbinden von wiederaufladbaren Batterien (18,18a...18f) mit dem Ladeverteiler (1) aufweist und ferner eine Kontrolleinheit (12,24) und mindestens eine Schaltvorrichtung (16,17) umfasst, wobei die Schaltvorrichtung (16,17) in Verbindung mit der Kontrolleinheit (12,24) steht, wobei die mindestens eine Schaltvorrichtung (16,17) mindestens einen Ladeschalter (30) umfasst, der den vom Ladegerät (6) kommenden Ladestrom an eine an den Anschlüssen (10,10a...10f) angeschlossene und zu ladende Batterie (18,18a...18f) schaltet und/oder schalten kann, mit den folgenden Schritten:
a) in einer Startsequenz Überprüfen von jedem Anschluss (10,10a...10f) des Ladeverteilers (1), ob mit diesem Anschluss (10,10a...10f) eine Batterie (18,18a...18f) verbunden ist, wobei während der Überprüfung die Spannung an den Anschlüssen (10,10a...10f) gemessen wird,
b) Zuschalten des vom Ladegerät (6) kommenden Ladestroms durch den Ladeverteiler (1) über einen Ladeschalter (30) an eine mit einem Anschluss (10,10a...10f) verbundene Batterie (18,18a...18f),
c) Weiterschalten des vom Ladegerät (6) kommenden Ladestroms durch den Ladeverteiler (1) über einen weiteren Ladeschalter (30) an eine weitere mit einem Anschluss (10,10a...10f) verbundene Batterie (18,18a...18f),
d) Überprüfen der Spannung an den Anschlüssen (10,10a...10f) und Detektion des Zustands bei einer oder mehrerer Batterien (18,18a...18f) hinsichtlich der Entladung,
wobei im Falle während dieser Spannungsüberprüfung der Anschlüsse (10,10a...10f) ermittelten Tiefentladung einer Batterie (18,18a...18f) diese durch zugeschalteten Impulsladestrom vom Ladegerät (6) durch den Ladeverteiler (1) auf den Anschluss (10,10a...10f) die tiefentladene Batterie (18,18a...18f) geladen wird und/oder in einen ladefähigen Zustand gebracht wird.

2. Verfahren nach Anspruch 1, bei dem die Batterie (18,18a...18f), welche den niedrigsten Ladezustand aufweist, bevorzugt aufgeladen wird und/oder bei dem das Weiterschalten des Ladestroms durch den Ladeverteiler (1) nach Abschluss einer vorgegebenen Zykluszeit erfolgt.

3. Verfahren nach Anspruch 1 oder 2, bei dem der Ladeverteiler (1) die Anschlüsse (10,10a...10f) kontinuierlich überprüft.

4. Verfahren nach einem der Ansprüche 1 bis 3, bei dem der Ladeverteiler (1) Anschlüsse (10,10a...10f), die nicht mit einer Batterie (18,18a...18f) verbunden und/oder nicht ladbar sind, vom weiteren Ladevorgang ausschließt.

5. Verfahren nach einem der Ansprüche 1 bis 4, bei dem der aktuelle Status und/oder der aktuelle Zustand der Batterie (18,18a...18f) auf einer Anzeige (7, 8,8a...8f, 9,9a...9c) ausgegeben wird.

6. Vorrichtung zum sequentiellen Aufladen, von mehreren wiederaufladbaren Batterien (18,18a...18f), umfassend
ein Ladegerät (6) und einen Ladeverteiler (1), die mittels einer elektrischen Verbindung (4) zusammenwirken, wobei der Ladeverteiler (1) folgendes aufweist:
a) mindestens zwei Anschlüsse (10,10a...10f) zum Verbinden von wiederaufladbaren Batterien (18,18a...18f) mit dem Ladeverteiler (1),
b) eine Kontrolleinheit (12,24), wobei die Kontrolleinheit (12,24) die Anschlüsse (10,10a...10f) überwacht und mindestens eine Spannung detektiert,
c) einen Ladestrompfad (11), über den der von dem Ladegerät (6) zur Verfügung gestellte Ladestrom an eine an einem Anschluss (10,10a...10f) angeschlossene und zu ladende Batterie (18,18a...18f) verteilt wird und/oder verteilt werden kann,
d) mindestens eine Schaltvorrichtung (16,17), die in Verbindung mit der Kontrolleinheit (12,24) steht, wobei die mindestens eine Schaltvorrichtung (16,17) mindestens einen Ladeschalter (30) umfasst, der den vom Ladegerät (6) kommenden Ladestrom an die an den Anschlüssen (10,10a...10f) angeschlossene und zu ladende Batterie schaltet und/oder schalten kann,
wobei das Ladegerät (6) durch den Ladeverteiler (1) über die Schaltvorrichtung (16,17) mit einer tiefentladenen Batterie (18,18a...18f) zumindest zeitweise in elektrischer Verbindung steht und/oder stehen kann und wobei der vom Ladegerät (6) kommende Ladestrom dieser Batterie (18,18a...18f) zum Laden als Impulsstrom zugeschaltet wird und/oder zugeschaltet werden kann.

7. Vorrichtung nach Anspruch 6, bei der die Kontrolleinheit (12,24) einen Multiplexer (14) umfasst.

8. Vorrichtung nach einem der Ansprüche 6 oder 7, bei der die elektrische Verbindung über einen Steckverbinder (3,5) realisiert wird.

9. Vorrichtung nach einem der Ansprüche 6 bis 8, bei der die Kontrolleinheit (12,24) Strom aus den angeschlossenen Batterien (18,18a...18f) entnimmt.

10. Vorrichtung nach einem der Ansprüche 6 bis 9, bei der die Kontrolleinheit (12,24) mit den Anschlüssen (10,10a...10f) in elektrischer Verbindung steht.

11. Vorrichtung nach Anspruch 10, bei der der Ladeverteiler (1) eine Ladestatusanzeige (8,8a...8f) und eine Anschlussanzeige (9,9a...9c) umfasst, die innerhalb eines Anzeigebereichs (7) angeordnet sind.

12. Vorrichtung nach Anspruch 11, bei der der Anzeigebereich (7) ein Display ist und/oder bei der die Ladestatusanzeige (8,8a...8f) und/oder die Anschlussanzeige (9,9a...9c) LED, vorzugsweise mehrfarbige LED umfasst.

13. Vorrichtung nach einem der Ansprüche 6 bis 12, bei der die Schaltvorrichtung (16,17) und/oder die Ladeschalter (30) zumindest einen Transistor umfassen.

14. Vorrichtung nach einem der Ansprüche 6 bis 13, bei der eine Hilfsspannungsquelle (23) vorgesehen ist.

15. Vorrichtung nach einem der Ansprüche 6 bis 14, bei der ein Kondensator (22), vorzugsweise ein Elektrolytkondensator, zur Entkopplung der Ladeströme von der Messung des Ladeverteilers (1) vorgesehen.
